# EUROPEAN PATENT APPLICATION

(11) **EP 4 772 312 A1**
(43) Date of publication of application: **08.07.2026**
(21) Application number: 23950869.0
(22) Date of filing: 29.08.2023
(51) Int. Cl.: B25J 11/00, B25J 5/00, B25J 9/00, B25J 13/08, B25J 19/02, A47B 96/02

(54) **ROBOT**

(71) Applicant: Bear Robotics Korea, Inc., Seoul 04779 (KR)
(72) Inventor: LEE, Haklim, Seoul 06772 (KR)
(74) Representative: Murgitroyd & Company
(86) International application number: PCT/KR2023/012781
(87) International publication number: WO 2025/047994

(57) **Abstract**

A robot is disclosed. The robot of the present disclosure may comprise: a base equipped with wheels; a frame coupled to the base and provided with an opening; and a tray assembly positioned in the opening of the frame. The tray assembly may comprise: a fixed tray coupled to the frame; and a moving tray coupled to the fixed tray so as to be movable in the direction passing through the opening of the frame.

## Description

### [Technical Field]

The present disclosure relates to a robot. In particular, the present disclosure relates to a robot used to deliver food or other objects to a user.

### [Background]

A robot refers to a machine that has the ability to work on its own. Robots have occupied a large portion in production automation and have developed into intelligent robots until recently. An intelligent robot refers to a robot that recognizes the external environment by itself, assesses the situation, and executes necessary tasks.

Intelligent robots may be largely classified into industrial robots and service robots. Unlike conventional industrial robots that perform tasks in environments isolated from humans, cooperative robots may assist humans or replace human tasks in the same space as humans. Such cooperative robots increase productivity by physically interacting with humans and performing tasks in the same space as humans. Service robots improves the convenience of human life by providing various services in social infrastructure. Recently, many studies on such intelligent robots have been conducted.

In particular, serving robots are used to deliver food to customers. However, conventional serving robots are only used to transport food to the front of a table, and customers or servers have to take the food loaded on the serving robot and place the same on the table, which causes inconvenience.

### [Summary]

### [Technical Problem]

A technical purpose of the present disclosure is to solve the above-described problems and other problems.

Another technical purpose of the present disclosure is to provide a robot capable of moving a tray to a specific position.

Still another technical purpose of the present disclosure is to provide a horizontal and/or vertical movement structure of a tray.

Yet another technical purpose of the present disclosure is to provide a robot capable of moving by itself and adjusting the height and position of a tray based on information sensed by a sensor.

### [Technical Solutions]

According to an aspect of the present disclosure for achieving the above or other technical purposes, a robot comprises: a base including a wheel; a frame coupled to the base and having an opening defined therein; and a tray assembly positioned in the opening of the frame, wherein the tray assembly includes: a fixed tray coupled to the frame; and a moving tray coupled to the fixed tray so as to be movable in a direction passing through the opening of the frame.

### [Advantageous Effects]

Effects of the robot according to the present disclosure will be described as follows.

According to at least one of the embodiments of the present disclosure, the robot capable of moving the tray to a specific position may be provided.

According to at least one of the embodiments of the present disclosure, the horizontal and/or vertical movement structure of the tray may be provided.

According to at least one of the embodiments of the present disclosure, the robot capable of moving by itself and adjusting the height and position of the tray based on information sensed by the sensor may be provided.

Additional scope of applicability of the present disclosure will become apparent from the detailed description below. However, because various changes and modifications within the spirit and scope of the present disclosure may be clearly understood by those skilled in the art, it should be understood that the detailed description and specific embodiments such as preferred embodiments of the present disclosure are given only as examples.

### [Brief Description of the Drawings]

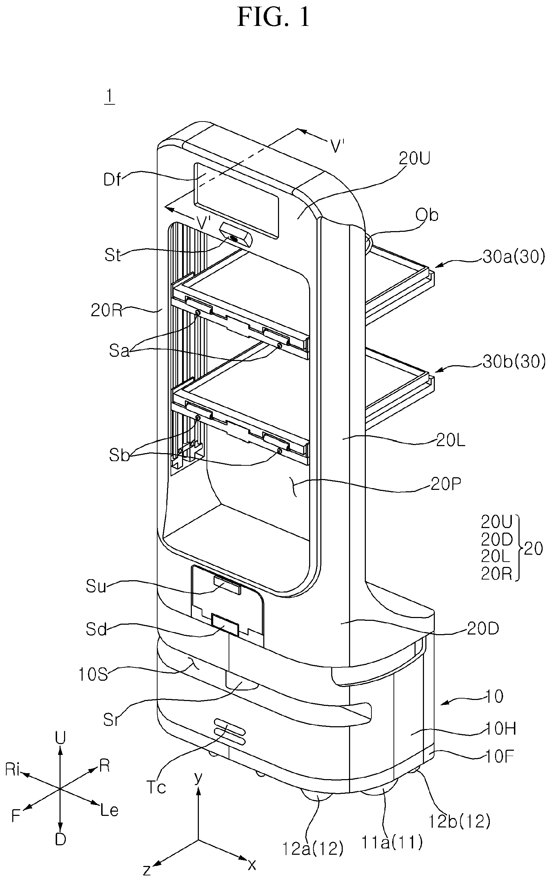

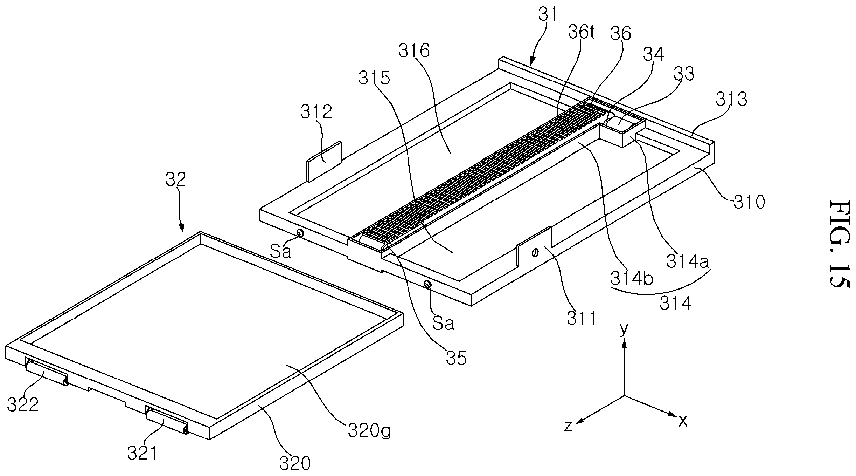

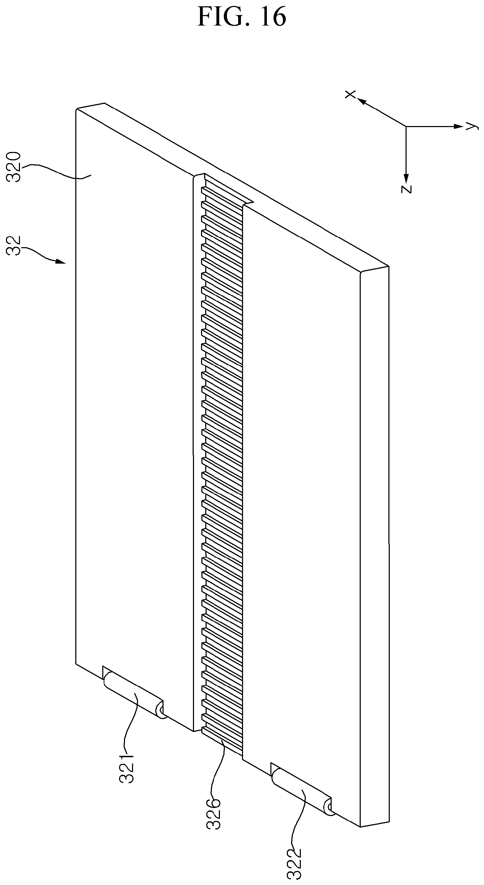

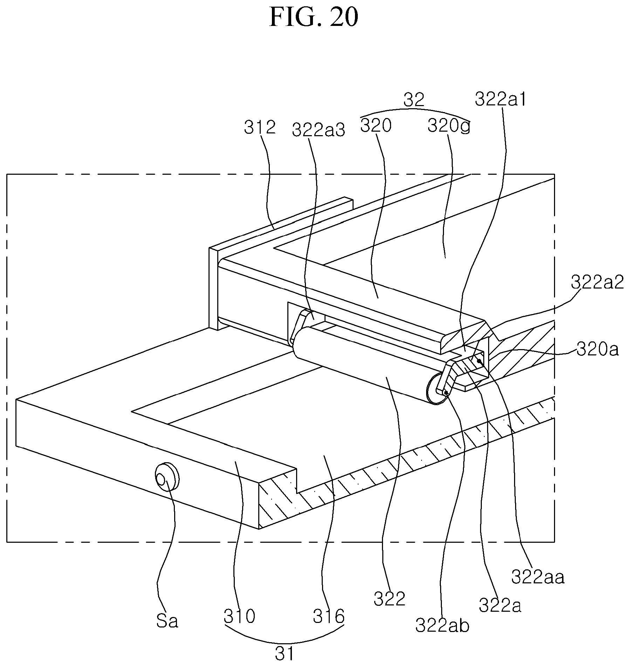

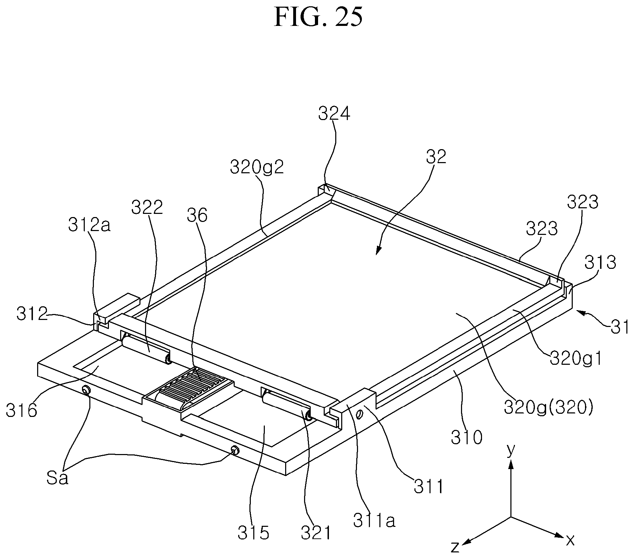

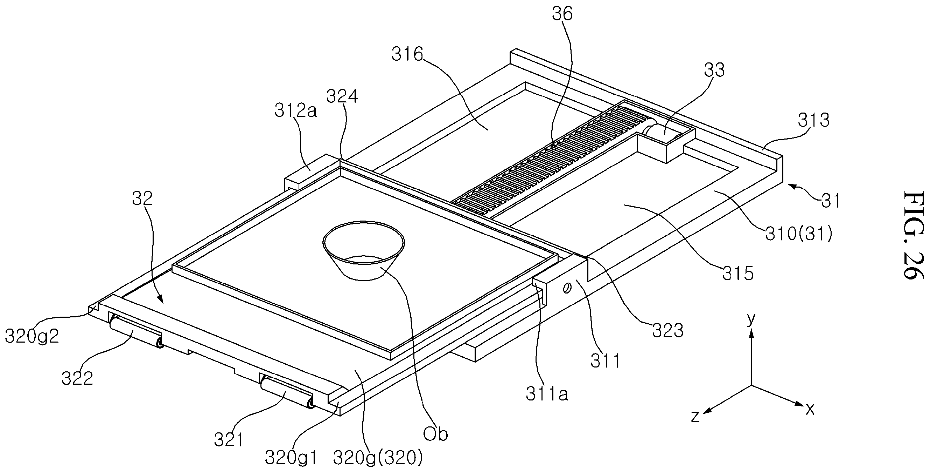

FIGS. 1 to 26 are diagrams illustrating examples of a robot according to embodiments of the present disclosure.

### [Best Mode]

Hereinafter, embodiments disclosed herein will be described in detail with reference to the accompanying drawings, but same or similar components will be given the same reference numerals regardless of drawing numbers, and redundant description thereof will be omitted.

Suffixes "module" and "unit" for components used in the following description are given or used interchangeably in consideration of only the ease of writing the present document, and do not have distinct meanings or roles.

In addition, in describing embodiments disclosed herein, when it is determined that a detailed description of related known technologies may obscure the gist of the embodiments disclosed herein, the detailed description thereof will be omitted. In addition, the accompanying drawings are only for easily understanding embodiments disclosed herein, and the technical spirit disclosed herein is not limited by the accompanying drawings. It should be understood that the present disclosure encompasses all modifications, equivalents, and substitutes falling within the spirit and technical scope of the present disclosure.

Terms including ordinals, such as first and second, may be used to describe various components, but the components are not limited by the terms. The terms are used only for the purpose of distinguishing one component from another component.

When it is mentioned that a component is "connected" or "joined" to another component, it should be understood that the component may be directly connected or joined to the other component, but a further component may be present therebetween. On the other hand, when it is mentioned that a component is "directly connected" or "directly joined" to another component, it should be understood that a third component is not present therebetween.

Singular expressions include plural expressions unless the context clearly indicates otherwise.

In the present application, it should be understood that terms such as "include" or "have" are intended to designate the presence of features, numbers, steps, operations, components, parts, or combinations thereof described herein, and do not preclude the presence or addition of one or more other features, numbers, steps, operations, components, parts, or combinations thereof.

The directional indications of up (U, y), down (D), left (Le, x), right (Ri), front (F, z), and rear (R) shown in the drawings are only for convenience of description, and the technical spirit disclosed herein is not limited thereby.

Referring to FIG. 1, a robot 1 may include a base 10, a frame 20, and a tray assembly 30. The robot 1 may be referred to as a serving robot 1 or a delivery robot 1.

The base 10 may be formed at a lower portion of the robot 1. The base 10 may have an overall block or box shape, and may be referred to as a body 10, a cabinet 10, or a cart 10. The base 10 may include a base plate 10F forming a bottom of the base 10 and a casing 10H forming an outer appearance of the base 10.

The frame 20 may be coupled to an upper end of the base 10 and may be opened in a front-rear direction. The frame 20 may be a rectangular frame elongated in a vertical direction, and an opening 20P of the frame 20 may also be defined to be elongated in the vertical direction. The frame 20 may have a shape of a rectangular ring or an O-ring. A lower part 20D may be located adjacent to a front end of the base 10 and coupled to the upper end of the base 10. For example, the lower part 20D may cover a top surface of the base 10. A left part 20L may be located adjacent to a left side of the lower part 20D and extend upward from the lower part 20D. A right part 20R may be located adjacent to a right side of the lower part 20D and extend upward from the lower part 20D. An upper part 20U may connect an upper end of the left part 20L with an upper end of the right part 20R. The parts 20D, 20L, 20R, and 20U of the frame 20 may form boundaries of the opening 20P of the frame 20.

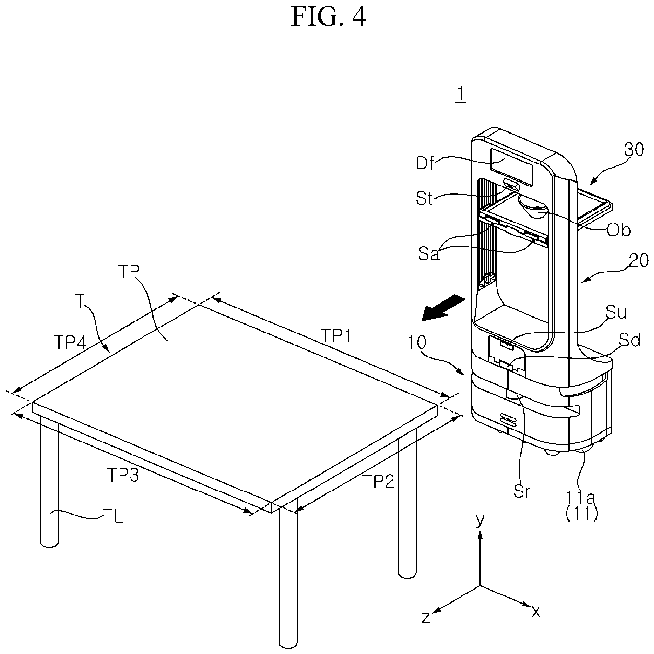

The tray assembly 30 may be located in the opening 20P of the frame 20 and may be coupled to the frame 20. The tray assembly 30 may extend in a direction intersecting the extension direction of the opening 20P. One tray assembly 30 may be coupled to the frame 20 (see FIGS. 4 to 6), or two or more tray assemblies 30 may be coupled to the frame 20. A user may place an object Ob on the tray assembly 30. For example, the object Ob may be a bowl or a tray containing food.

The robot 1 may include at least one sensor that senses an object around the robot 1. A lidar Sr may be mounted in a groove 10S defined in a front surface of the base 10 and may sense surroundings of the robot 1. An upper sensor Su and a lower sensor Sd may be mounted on a front surface of the lower part 20D of the frame 20 and may sense an object in front of the robot 1. The upper sensor Su may be adjacent to an upper end of the lower part 20D and may be a time of flight (TOF) camera oriented obliquely downward. The lower sensor Sd may be adjacent to a lower end of the lower part 20D and may be a time of flight (TOF) camera oriented obliquely upward. A top sensor St may be mounted on a front surface of the upper part 20U of the frame 20 and may sense an object in front of the robot 1. The top sensor S5 may be a time of flight (TOF) camera and/or an RGB camera oriented obliquely downward. Front sensors Sa and Sb may be mounted at a front end of the tray assembly 30 and may sense an object in front of the tray assembly 30. The front sensors Sa and Sb may be time of flight (TOF) cameras oriented forward of the tray assembly 30.

The robot 1 may include a charging terminal Tc connected to a battery embedded in the robot 1. The charging terminal Tc may be mounted on the front surface of the base 10 at a position adjacent to a lower end of the base 10. The battery embedded in the base 10 may be charged by an external power source connected to the charging terminal Tc, and the robot 1 may be driven by power of the battery.

The robot 1 may include a display that displays a state or information of the robot 1 or information (e.g., a message informing serving of an object Ob) provided to a user interacting with the robot 1. For example, a front display Df may be mounted on the front surface of the upper part 20U of the frame 20. For example, a rear display Dr may be mounted on a rear surface of the upper part 20U of the frame 20. In one example, a user may control operation of the robot 1 by touching icons or buttons displayed on the displays Df and Dr.

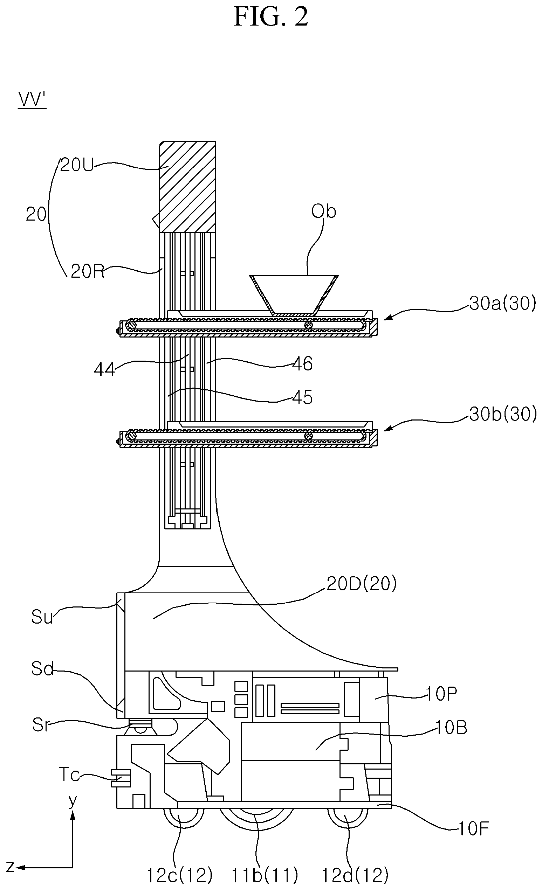

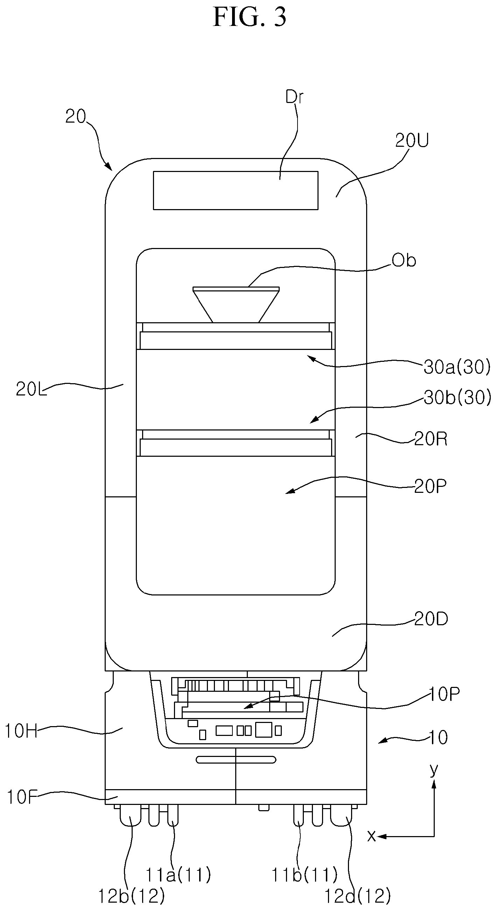

Referring to FIGS. 2 and 3, various electronic components 10P such as a battery 10B and a printed circuit board (PCB) may be mounted on a base plate 10F of the base 10. The casing 10H of the base 10 may cover the components embedded in the base 10.

A wheel may be mounted on the base plate 10F and may rotate under the base plate 10F. A driving wheel 11 may be mounted on the base plate 10F and may include an in-wheel motor. For example, a first driving wheel 11a may be adjacent to a left side of the base plate 10F, and a second driving wheel 11b may be adjacent to a right side of the base plate 10F. A sub-wheel 12 may be mounted on the base plate 10F and may be rotated according to the movement of the base 10 by the driving wheel 11. The sub-wheel 12 may be a caster wheel. For example, first and second sub-wheels 12a and 12b (see FIG. 1) may be adjacent to the left side of the base plate 10F and may be opposite to each other with respect to the first driving wheel 11a. For example, third and fourth sub-wheels 12c and 12d (see FIG. 2) may be adjacent to the right side of the base plate 10F and may be opposite to each other with respect to the second driving wheel 11b.

Accordingly, the robot 1 may move on the ground using the wheels 11 and 12. The base 10 including the wheels 11 and 12 may be referred to as a moving base 10.

Referring to FIGS. 4 to 6, a table T may include a top plate TP and legs TL. The robot 1 on which the object Ob is loaded may move itself toward the table T based on the information sensed by the sensor that senses the surroundings of the robot 1. The robot 1 close to the table T may move a moving tray 32 on which the object Ob is placed from a fixed tray 31 to the top plate TP of the table T. A controller of the robot 1 may control movement of the robot 1, vertical movement of the fixed tray 31, and horizontal movement of the moving tray 32 described above or to be described later, based on the information sensed by the sensor. Accordingly, the robot 1 may serve the object Ob to a user.

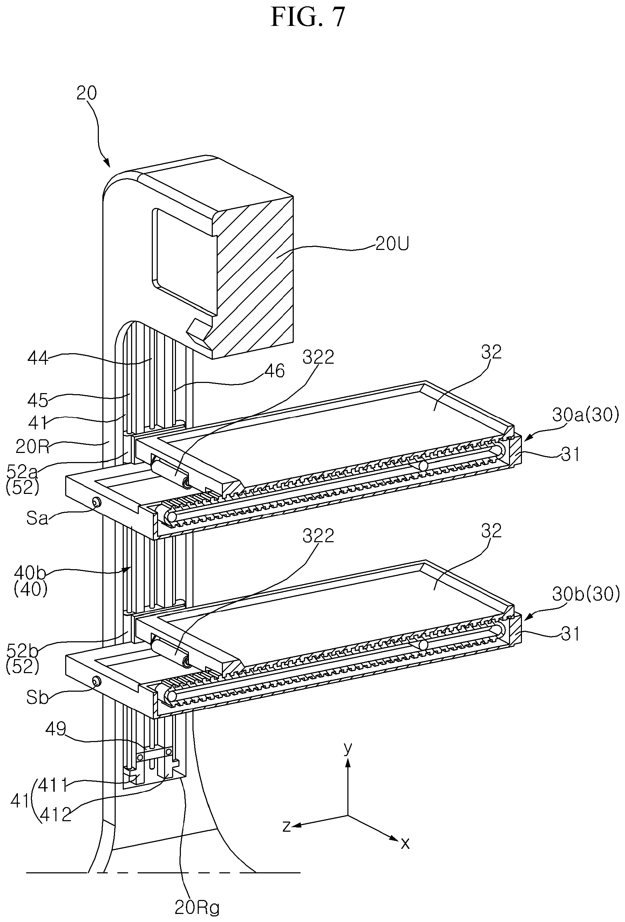

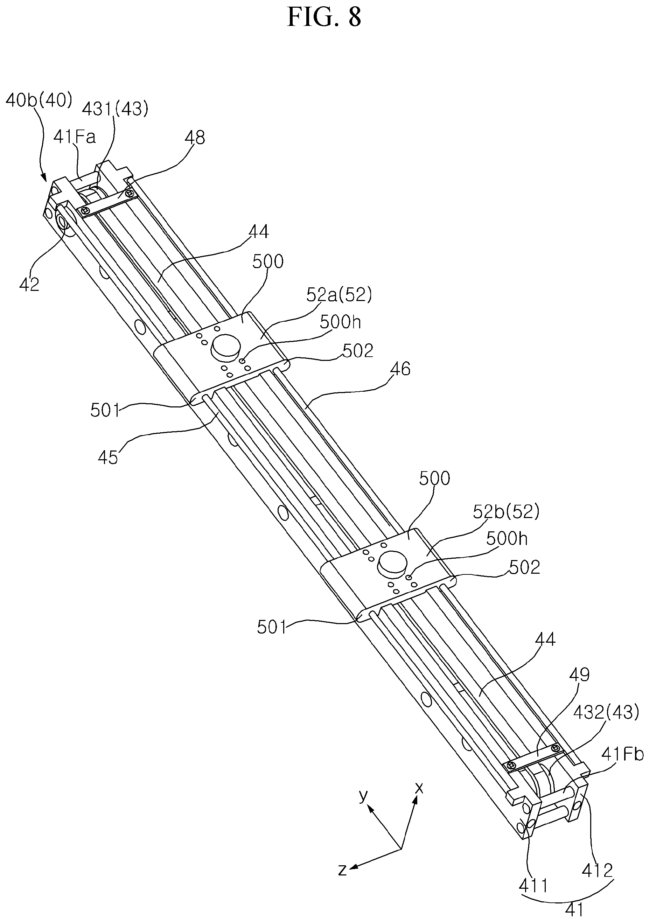

Referring to FIGS. 7 and 8, a guide frame 41 may be mounted on the right part 20R of the frame 20. The guide frame 41 may be mounted in a groove 20Rg defined in an inner surface of the right part 20R. The guide frame 41 may be referred to as a guide rail 41. The guide frame 41 may include a first bar 411 and a second bar 412 spaced apart from each other in a width direction (i.e., the front-rear direction) of the right part 20R. The first bar 411 and the second bar 412 may extend in the vertical direction. A first coupling portion 41Fa may connect an upper end of the first bar 411 with an upper end of the second bar 412. A second coupling portion 41Fb may connect a lower end of the first bar 411 with a lower end of the second bar 412.

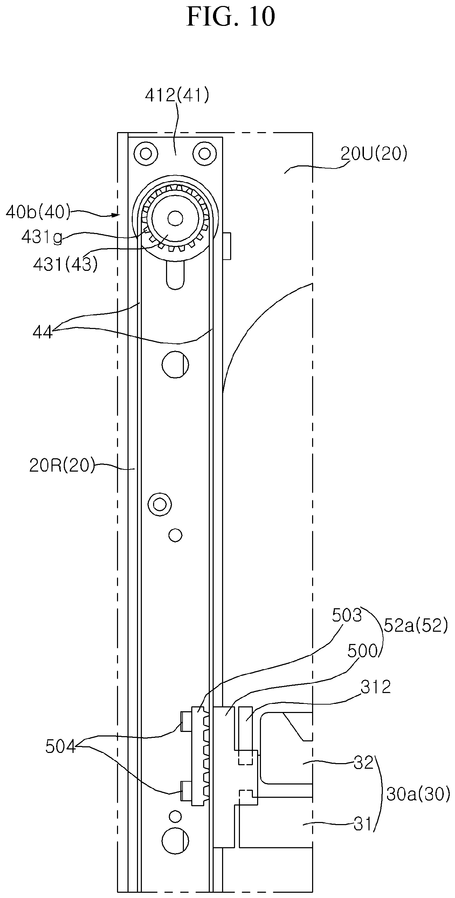

A first pulley 431 may be located adjacent to an upper end of the guide frame 41 and between the first and second bars 411 and 412. The first pulley 431 may be rotatably coupled to the first and second bars 411 and 412. First grooves 431g (see FIG. 10) may be defined in an outer circumferential surface of the first pulley 431 at a regular pitch. The first pulley 431 may be referred to as an upper pulley 431, and the first grooves 431g may be referred to as upper grooves 431g.

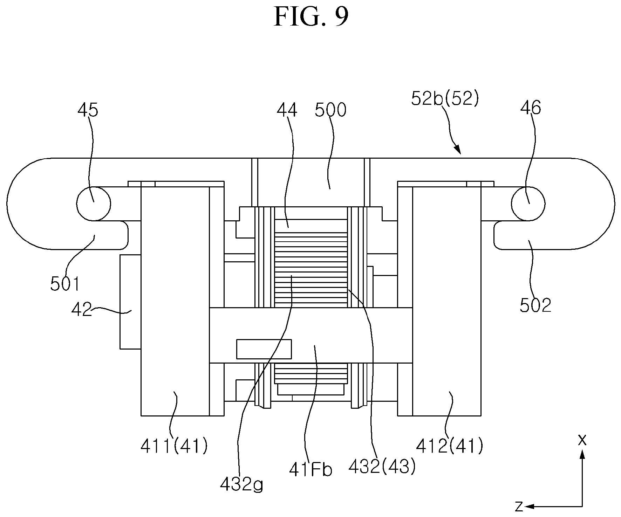

A second pulley 432 may be located adjacent to a lower end of the guide frame 41 and between the first and second bars 411 and 412. The second pulley 432 may be rotatably coupled to the first and second bars 411 and 412. Second grooves 432g (see FIG. 9) may be defined in an outer circumferential surface of the second pulley 432 at a regular pitch. The second pulley 432 may be referred to as a lower pulley 432, and the second grooves 432g may be referred to as lower grooves 432g.

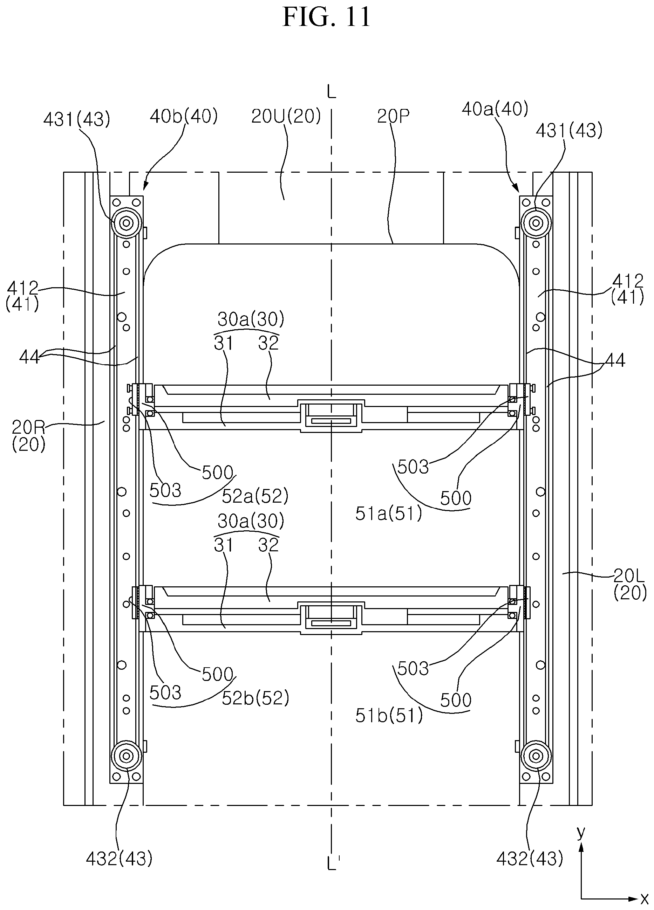

A belt 44 may be wound around the first pulley 431 and the second pulley 432, and may connect the first pulley 431 with the second pulley 432. The belt 44 may form a closed loop. Teeth may be formed at a regular pitch on an inner surface of the belt 44, may be engaged with the first grooves 431g (see FIG. 11) of the first pulley 431, and may be engaged with the second grooves 432g (see FIG. 9) of the second pulley 432. The teeth may be referred to as cogs. Accordingly, the belt 44 may rotate the second pulley 432 or the first pulley 431 in response to the rotation of the first pulley 431 or the second pulley 432. In addition, the first and second pulleys 431 and 432 may apply tension to the belt 44, and as a result, the belt 44 may be kept tight.

A motor may be located adjacent to the guide frame 41 and may provide rotational force. The motor may be an electric motor capable of adjusting a rotation direction, a rotation angle, and a rotation speed. For example, the motor may be located adjacent to the upper end of the guide frame 41 and mounted on the right part 20R of the frame 20, and a rotation shaft 42 of the motor may be fixed to the first pulley 431 to rotate the first pulley 431. As another example, the motor may be located adjacent to the lower end of the guide frame 41 and mounted on the right part 20R of the frame 20, and the rotation shaft 42 of the motor may be fixed to the second pulley 432 to rotate the second pulley 432.

A first guide shaft 45 may be adjacent to the first bar 411 and may extend to be elongated along the first bar 411. The first guide shaft 45 may be opposite to the belt 44 with respect to the first bar 411, or may be positioned between the first bar 411 and the belt 44. Upper and lower ends of the first guide shaft 45 may be fixed to the first bar 411.

A second guide shaft 46 may be adjacent to the second bar 412 and may extend to be elongated along the second bar 412. The second guide shaft 46 may be opposite to the belt 44 with respect to the second bar 412, or may be positioned between the second bar 412 and the belt 44. Upper and lower ends of the second guide shaft 46 may be fixed to the second bar 412.

Referring to FIGS. 9 and 10, a bracket 52 may include a body 500, a first hand 501, a second hand 502, and a fixer 503.

The body 500 may face one side of the guide frame 41 and the belt 44, and may extend in a direction in which the first bar 411 and the second bar 412 are spaced apart from each other.

The first hand 501 may be bent from one end of the body 500 so as to surround the first guide shaft 45. The first hand 501 may move in a longitudinal direction of the first guide shaft 45.

The second hand 502 may be bent from an opposite end of the body 500 so as to surround the second guide shaft 46. The second hand 502 may move in a longitudinal direction of the second guide shaft 46.

The fixer 503 may be opposite to the body 500 with respect to the belt 44. A fastening member 504 such as a screw may be fastened into a hole 500h (see FIG. 8) of the body 500 by extending through the fixer 503.

Accordingly, the bracket 52 may be fixed to a portion of the belt 44. The bracket 52 may move in response to the movement of the belt 44 corresponding to the rotation of the pulley 43. The guide shafts 45 and 46 may guide the vertical movement of the bracket 52 and may minimize movements other than the vertical movement of the bracket 52.

Referring back to FIG. 8, a first stopper 48 may be located adjacent to the upper end of the guide frame 41 and fixed to the guide frame 41, and may face an upper end of the bracket 52. A second stopper 49 may be located adjacent to the lower end of the guide frame 41 and fixed to the guide frame 41, and may face a lower end of the bracket 52.

Accordingly, the ascent of the bracket 52 may be limited as the bracket 52 comes into contact with the first stopper 48, and the descent of the bracket 52 may be limited as the bracket 52 comes into contact with the second stopper 49.

Referring to FIG. 11 together with FIGS. 7 and 8, a second lift assembly 40b may be mounted on the right part 20R of the frame 20, and may include the guide frame 41, the first pulley 431, the second pulley 432, and the belt 44 described above. A first lift assembly 40a may be mounted on the left part 20L of the frame 20, and may be symmetrical to the second lift assembly 40b with respect to a vertical line LL' extending through a central portion of the frame 20. That is, the first lift assembly 40a may also include the guide frame 41, the first pulley 431, the second pulley 432, and the belt 44 described above.

A first tray assembly 30a may be positioned between the first and second lift assemblies 40a and 40b. A second bracket 52a may be fixed to a right side of the fixed tray 31 of the first tray assembly 30a, and a first portion of the belt 44 of the second lift assembly 40b may be fixed while being positioned between the body 500 and the fixer 503 of the second bracket 52a. A first bracket 51a may be fixed to a left side of the fixed tray 31 of the first tray assembly 30a, and may be symmetrical to the second bracket 52a with respect to the vertical line LL' extending through the central portion of the first tray assembly 30a. That is, a first portion of the belt 44 of the first lift assembly 40a may be fixed while being positioned between the body 500 and the fixer 503 of the first bracket 51a.

A second tray assembly 30b may be positioned between the first and second lift assemblies 40a and 40b, and may be spaced downwardly apart from the first tray assembly 30a. A second bracket 52b may be fixed to a right side of the fixed tray 31 of the second tray assembly 30b, and may have the same structure and shape as the second bracket 52a fixed to the right side of the fixed tray 31 of the first tray assembly 30a. That is, a second portion of the belt 44 of the second lift assembly 40b may be fixed while being positioned between the body 500 and the fixer 503 of the second bracket 52b. A first bracket 51b may be fixed to a left side of the fixed tray 31 of the second tray assembly 30b, and may have the same structure and shape as the first bracket 51a fixed to the left side of the fixed tray 31 of the first tray assembly 30a. That is, a second portion of the belt 44 of the first lift assembly 40a may be fixed while being positioned between the body 500 and the fixer 503 of the first bracket 51b.

Accordingly, the first and second tray assemblies 30a and 30b may be ascend or descend in response to the operation of the first and second lift assemblies 40a and 40b.

Referring back to FIG. 4, the top plate TP of the table T may include four sides TP1, TP2, TP3, and TP4. The RGB camera of the top sensor St may sense the top plate TP and an object placed on the top plate TP. The robot 1 may determine a position of the top plate TP suitable for placing the object Ob loaded on the robot 1 based on the information obtained by the top sensor St. According to the determination, the robot 1 may approach a specific position on any of the four sides TP1, TP2, TP3, and TP4. For example, the robot 1 may approach a center of the first side TP1.

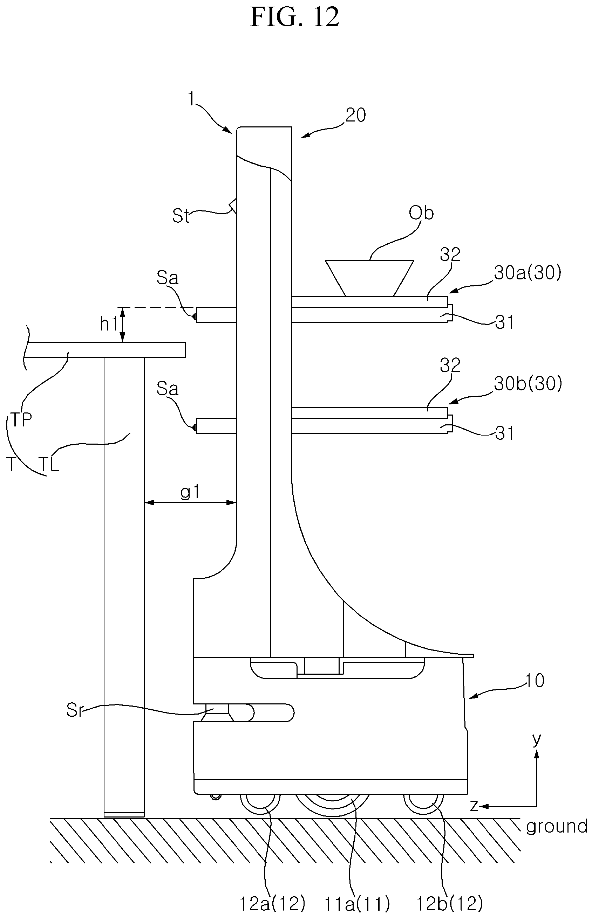

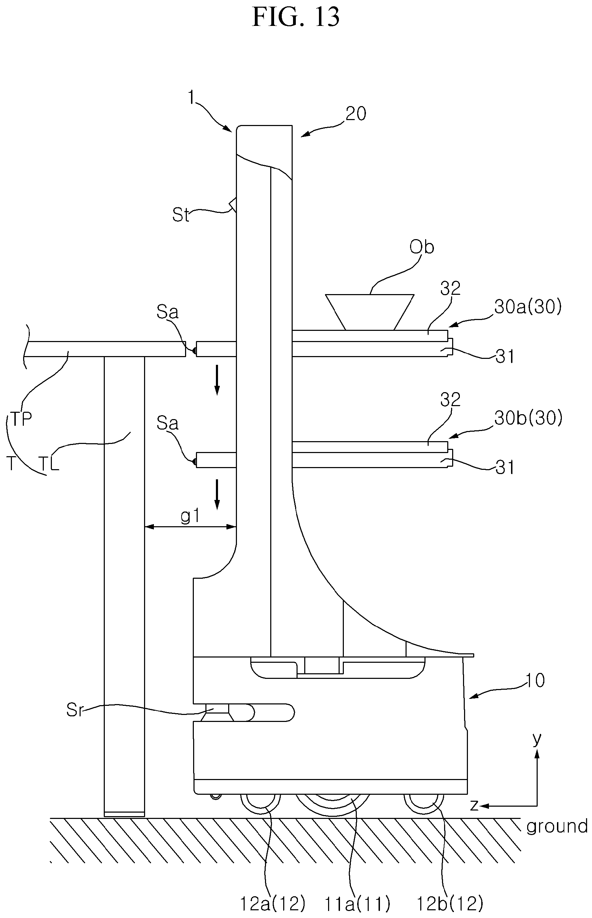

Referring to FIGS. 12 and 13, the TOF camera of the top sensor St may sense a distance between the robot 1 and the table T. The robot 1 may move toward the table T based on the information obtained by the top sensor St. When the distance between the robot 1 and the table T (e.g., a distance between the frame 20 and the leg TL) becomes a reference distance g1, the robot 1 may stop moving.

A first front sensor Sa may be mounted on a front end of the fixed tray 31 of the first tray assembly 30a, and may sense a distance between the first tray assembly 30a and an object in front of the first tray assembly 30a. For example, the first front sensor Sa may include a pair of units.

A second front sensor Sb may be mounted on the front end of the fixed tray 31 of the second tray assembly 30b, and may sense a distance between the second tray assembly 30b and an object in front of the second tray assembly 30b. For example, the second front sensor Sb may include a pair of units.

For example, the object Ob may be placed on the first tray assembly 30a. The robot 1 may calculate a vertical level difference h1 between the first tray assembly 30a and the top plate TP of the table T based on the information obtained by the first front sensor Sa. According to the calculation, the robot 1 may adjust a vertical level of the first tray assembly 30a to match a vertical level of the top plate TP of the table T. When the vertical level adjustment of the first tray assembly 30a is completed, the first front sensor Sa may face and approach the top plate TP of the table T, and a bottom surface of the moving tray 32 may be located at a vertical level the same as or higher than that of a top surface of the top plate TP.

In one example, a distance between the first tray assembly 30a and the second tray assembly 30b may be maintained constant.

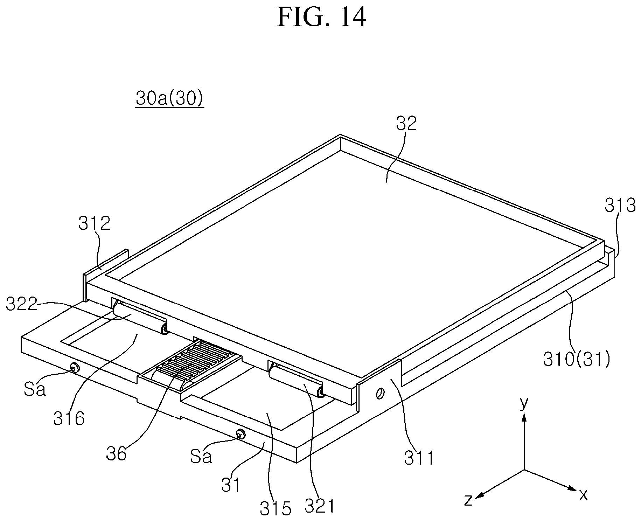

Referring to FIGS. 14 to 16, the tray assembly 30 may include the fixed tray 31, the moving tray 32, and a sliding assembly 33, 34, 35, and 36.

A base 310 of the fixed tray 31 may have an overall rectangular plate shape. A first rib 311 may be positioned adjacent to a front end of the base 310 and protrude upward from a left side of the base 310. A second rib 312 may be positioned adjacent to the front end of the base 310 and protrude upward from a right side of the base 310. A third rib 313 may protrude upward from a rear end of the base 310 and extend along the rear end. A mounting groove 314 may be defined in a central portion of a top surface of the base 310 and may be elongated along a longitudinal direction of the base 310. Recessed portions 315 and 316 may be defined in the top surface of the base 310 at positions adjacent to the mounting groove 314. A first recessed portion 315 may be located on a left side of the mounting groove 314 and may be elongated along the mounting groove 314. A second recessed portion 316 may be located on a right side of the mounting groove 314 and may be elongated along the mounting groove 314.

The moving tray 32 may be seated on the fixed tray 31. A base 320 of the moving tray 32 may have an overall rectangular plate shape. A left side of the base 320 may be adjacent to or in contact with an inner surface of the first rib 311 of the fixed tray 31. A right side of the base 320 may be adjacent to or in contact with an inner surface of the second rib 312 of the fixed tray 31. A rear end of the base 320 may face an inner surface of the third rib 313 of the fixed tray 31. A seating groove 320g may be defined in a top surface of the base 320, and the object Ob (see FIGS. 12 and 13) may be placed on the seating groove 320g. Rotary members 321 and 322 may be rotatably coupled to a front end of the base 320, and may be spaced upwardly apart from the recessed portions 314 and 315 of the fixed tray 31. The rotary members 321 and 322 may be rollers roller or balls having a rotation shaft parallel to the front end of the base 320. A first rotary member 321 may be positioned adjacent to a left side of the base 320 and be rotatably coupled to the front end of the base 320, and may be spaced upwardly apart from the first recessed portion 314. A second rotary member 322 may be positioned adjacent to a right side of the base 320 and be rotatably coupled to the front end of the base 320, and may be spaced upwardly apart from the second recessed portion 315.

A rack 326 may be formed at a central portion of a bottom surface of the base 320 of the moving tray 32, and may be formed to be elongated along a longitudinal direction of the base 320. The rack 326 may be formed in a recessed portion defined in the bottom surface of the base 320. The rack 326 may be a set of grooves defined at a regular pitch.

The sliding assembly 33, 34, 35, and 36 may include a motor 33, a first pulley 34, a second pulley 35, and a belt 36. The mounting groove 314 may include a first portion 314a in which the motor 33 is located and a second portion 314b in which the remaining components 34, 35, and 36 of the sliding assembly are located. The second portion 314b may be formed to be elongated in the longitudinal direction of the fixed tray 31, and the first portion 314a may protrude left or right from the second portion 314b.

The motor 33 may provide rotational force. The motor 33 may be an electric motor capable of adjusting a rotation direction, a rotation angle, and a rotation speed. A rotation shaft of the motor 33 may extend parallel to a width direction (i.e., the left-right direction) of the fixed tray 31.

The first pulley 34 may be adjacent to a rear end of the first portion 314a of the mounting groove 314 and may be fixed to the rotation shaft of the motor 33. A rotation shaft of the first pulley 34 may be coaxial with the rotation shaft. First grooves may be defined in an outer circumferential surface of the first pulley 34 at a regular pitch. The first pulley 34 may be referred to as a rear pulley 34, and the first grooves may be referred to as rear grooves.

The second pulley 35 may be adjacent to a front end of the first portion 314a of the mounting groove 314. A rotation shaft of the second pulley 35 may be parallel to the rotation shaft of the first pulley 34. Second grooves may be defined in an outer circumferential surface of the second pulley 35 at a regular pitch. The second pulley 35 may be referred to as a front pulley 35, and the second grooves may be referred to as front grooves.

The belt 36 may be wound around the first pulley 34 and the second pulley 35, and may connect the first pulley 34 with the second pulley 35. The belt 36 may form a closed loop. Teeth may be formed at a regular pitch on an inner surface of the belt 36, may be engaged with the first grooves of the first pulley 34, and may be engaged with the second grooves of the second pulley 35. The teeth may be referred to as cogs. Accordingly, the belt 36 may rotate the second pulley 35 in response to the rotation of the rotation shaft of the motor 33 and the rotation of the first pulley 34. In addition, tension may be applied to the belt 36 by the first and second pulleys 34 and 35, and as a result, the belt 36 may be kept tight.

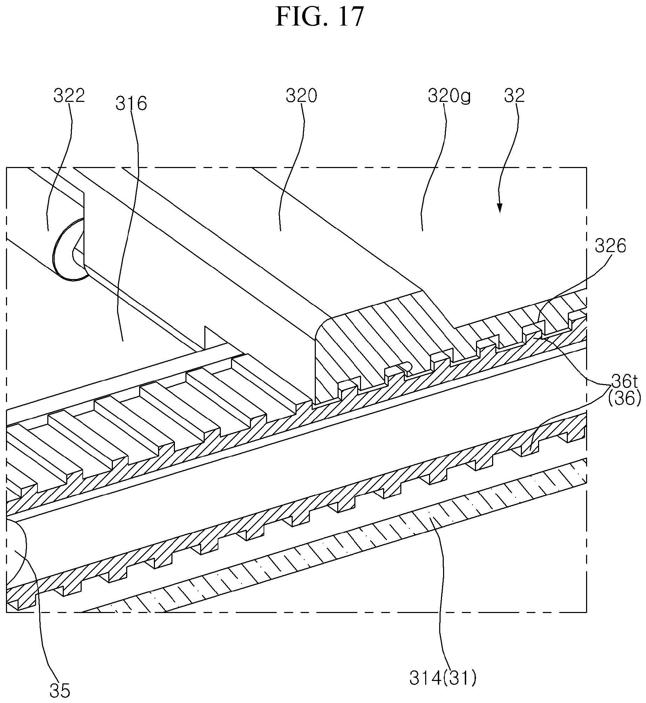

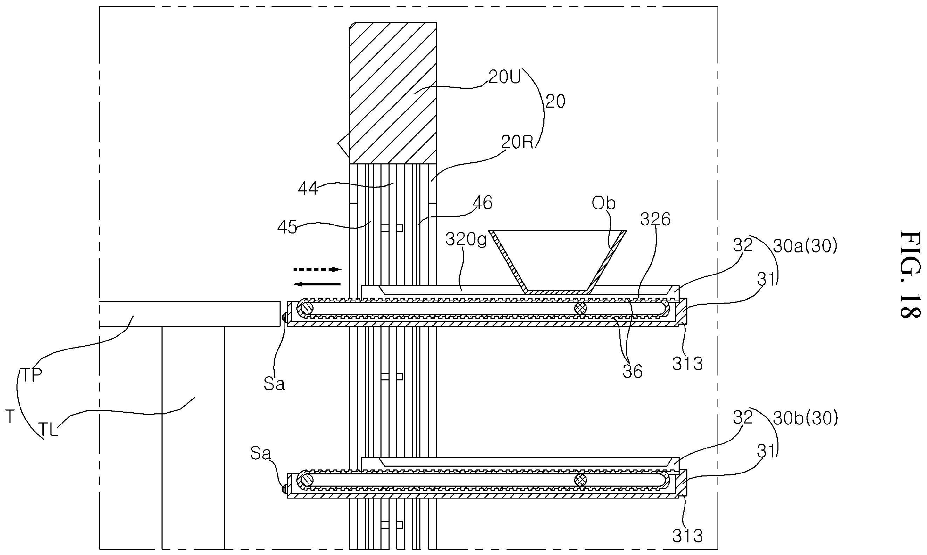

Referring to FIGS. 17 and 18, gear teeth 36t may be formed on an outer surface of the belt 36 at a regular pitch. When the moving tray 32 is seated on the fixed tray 31, the grooves of the rack 326 may be engaged with the gear teeth 36t of the belt 36.

Accordingly, when the belt 36 rotates in a first direction (i.e., a counterclockwise direction), the moving tray 32 on the fixed tray 31 may move forward (see a solid arrow in FIG. 18). When the belt 36 rotates in a second direction (i.e., a clockwise direction) opposite to the first direction, the moving tray 32 on the fixed tray 31 may move rearward (see a dotted arrow in FIG. 18). The third rib 313 may be in contact with a rear end of the moving tray 32, thereby limiting the rearward movement of the moving tray 32.

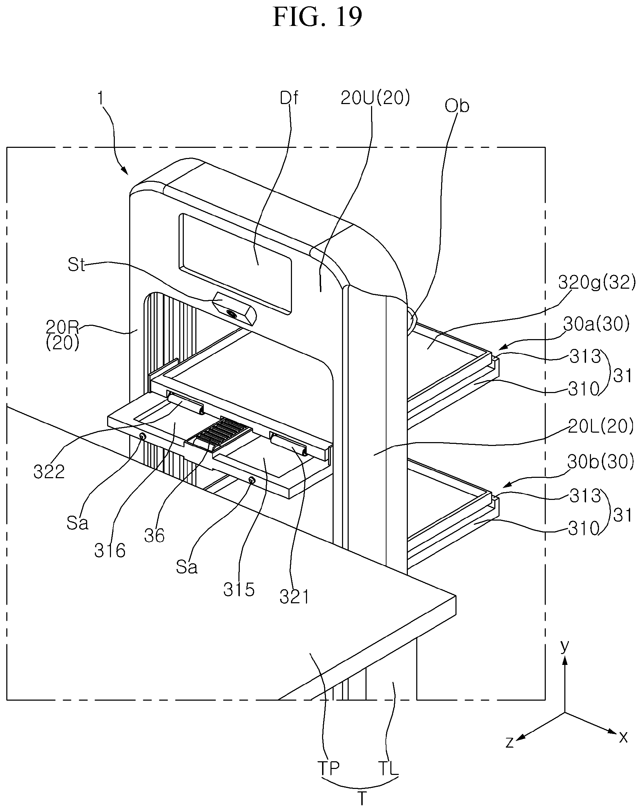

Referring to FIGS. 19 to 21, the first rib 311 and the second rib 312 may guide forward or rearward movement of the moving tray 32. That is, the moving tray 32 may move back and forth while being positioned between the first and second ribs 311 and 312.

A second holder 322a may be mounted in a groove 320a defined at the front end of the base 320 of the moving tray 32, and may include a holder body 322a1, a first wing 322a2, and a second wing 322a3. The holder body 322a1 may extend to be elongated in the left-right direction. The first wing 322a2 may protrude forward from a leftmost end of the holder body 322a1, and may be bent once, for example. The second wing 322a3 may protrude forward from a rightmost end of the holder body 322a1, and may be bent once, for example. The second rotary member 322 may be positioned between the first wing 322a2 and the second wing 322a3.

Pins 322aa may protrude from both ends of the holder body 322a1, and may be coupled or fixed to the groove 320a. A shaft 322ab may extend to be elongated while being positioned between the first wing 322a2 and the second wing 322a3, and may be coupled to the first wing 322a2 and the second wing 322a3 while extending through the second rotary member 322. The second rotary member 322 may rotate about the shaft 322ab.

Accordingly, the second rotary member 322 may be rotatably coupled to the base 320 of the moving tray 32 through the second holder 322a. Likewise, the first rotary member 321 may also be rotatably coupled to the base 320 of the moving tray 32 through a first holder similar to the second holder 322a.

The first and second rotary members 321 and 322 may rotate on the top plate TP according to the movement of the moving tray 32 on the top plate TP of the table T. In this regard, the first and second rotary members 321 and 322 may protrude downward from the bottom surface of the base 320 of the moving tray 32, and as a result, a gap g1 may be defined between the bottom surface of the base 320 and the top plate TP. Accordingly, friction between the moving tray 32 and the top plate TP may be minimized.

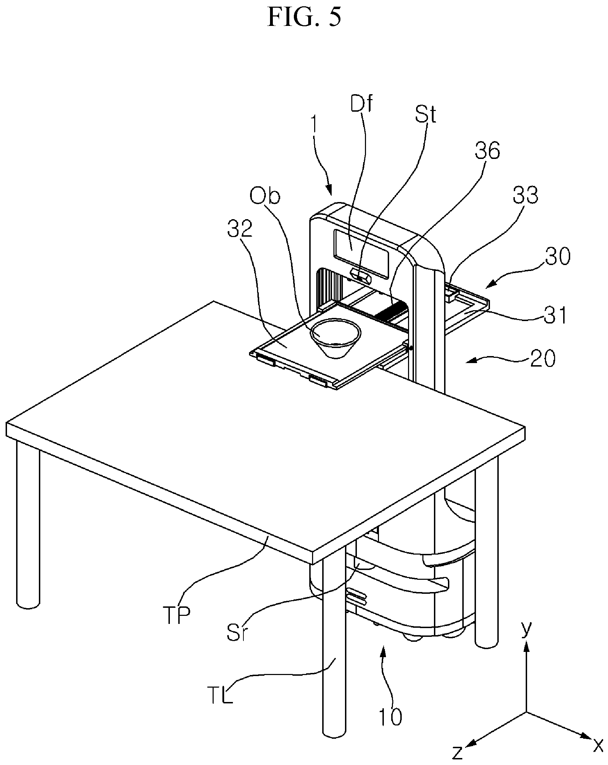

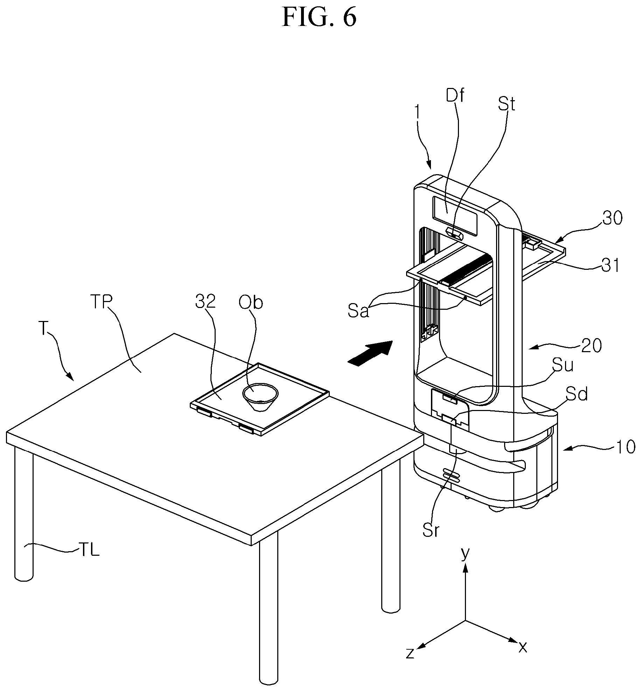

In one example, when the moving tray 32 is separated from the fixed tray 31 (see FIGS. 5 and 6), the rear end of the base 320 of the moving tray 32 may be in contact with the top plate TP. In this case, the moving tray 32 may be seated on the top plate TP in a state in which a front side thereof is slightly lifted by the first and second rotary members 321 and 322.

The robot 1 may recover the moving tray 32. For example, a user may place the moving tray 32 on the fixed tray 31 again and then issue a recovery command to the front display Df. In this case, the moving tray 32 may move rearward in response to the rotation of the belt 36, and the rearward movement of the moving tray 32 may be limited when the rear end of the moving tray 32 comes into contact with the third rib 313.

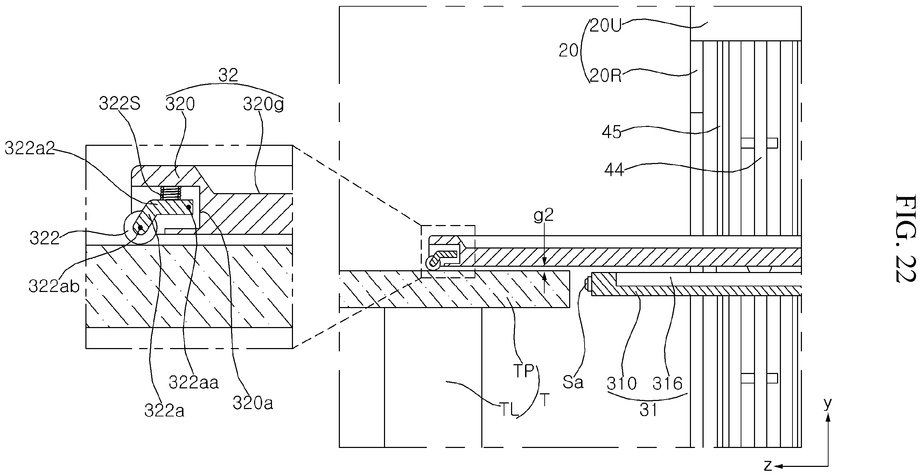

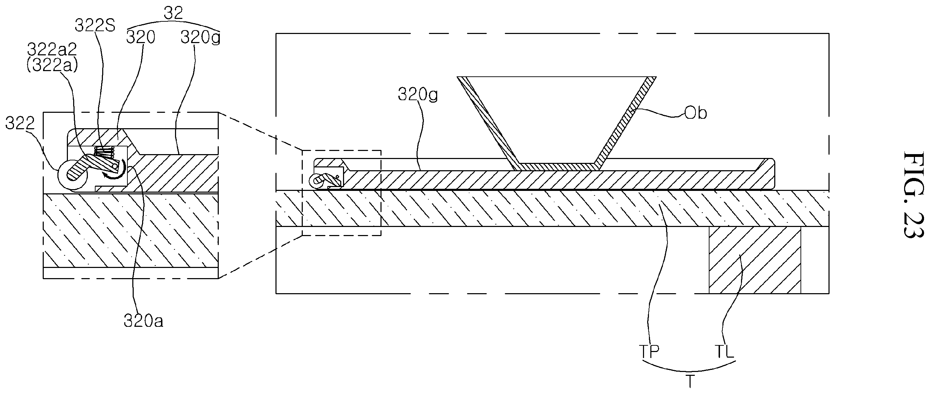

Referring to FIGS. 22 and 23, the pins 322aa of the second holder 322a may be rotatably coupled to the groove 320a. One end (i.e., a lower end) of an elastic member 322S of the second holder 322a may be fixed onto the first wing 322a2 and/or the second wing 322a3, and an opposite end (i.e., an upper end) of the elastic member 322S may be fixed to the groove 320a. The elastic member 322S may be a coiled spring, and may be elastically deformed in the vertical direction. Similarly, the first holder connecting the first rotary member 321 to the base 320 of the moving tray 32 may have the same components as the pins 322aa and the elastic member 322S of the second holder 322a.

Before the first and second rotary members 321 and 322 are positioned on the top plate TP of the table T, the elastic member 322S may be in a first state. In this regard, the first and second rotary members 321 and 322 may protrude downward from the bottom surface of the base 320 of the moving tray 32.

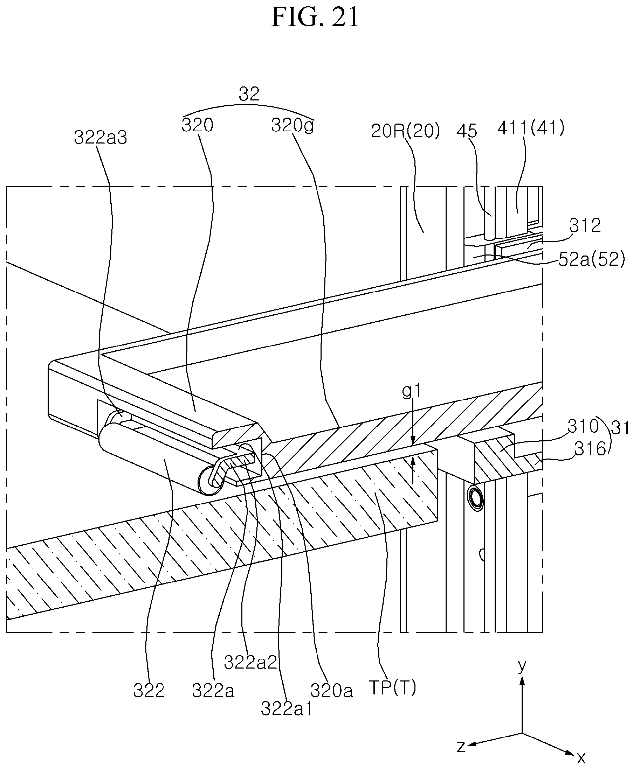

When the first and second rotary members 321 and 322 are positioned on the top plate TP of the table T (see FIG. 22), the elastic member 322S may be in a second state in which the elastic member 322S is compressed from the first state by the load of the moving tray 32. In this regard, the first and second rotary members 321 and 322 may rotate in a direction in which they are inserted into the base 320. In addition, a portion of the load of the moving tray 32 may be supported by the fixed tray 31, and a gap g2 may be defined between the bottom surface of the base 320 of the moving tray 32 and the top plate TP. The gap g2 (see FIG. 22) may be smaller than the gap g1 (see FIG. 21).

When the moving tray 32 separated from the fixed tray 31 is located on the top plate TP of the table T (see FIG. 23), the elastic member 322S may be in a third state in which the elastic member 322S is compressed from the second state by the load of the moving tray 32. In this regard, the first and second rotary members 321 and 322 may be further inserted into the base 320. In addition, the bottom surface of the base 320 of the moving tray 32 may be in contact with the top plate TP, and a force at a predetermined level or higher may be required for the movement of the moving tray 32 on the top plate TP due to friction between the moving tray 32 and the top plate TP.

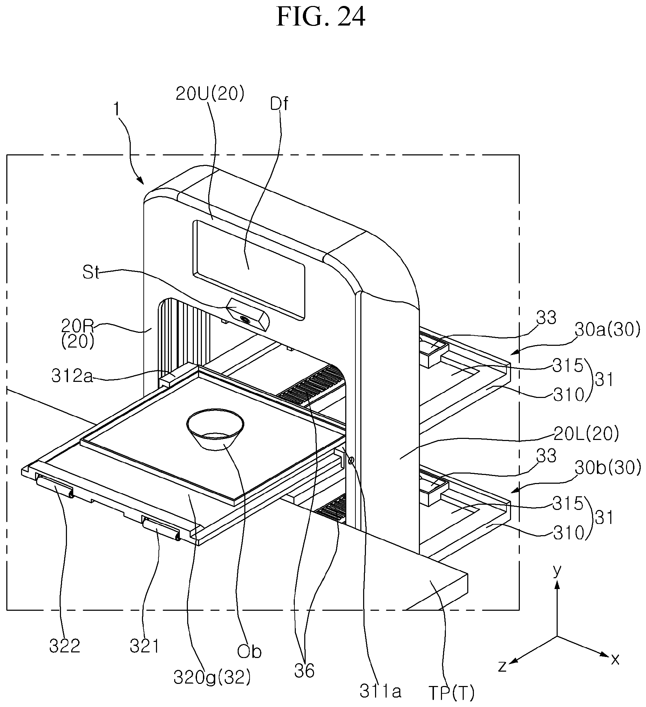

Referring to FIGS. 24 to 26, a first stopper 311a may be bent to the right from an upper end of the first rib 311 of the fixed tray 31. A first portion 323 may form a portion of the rear end of the moving tray 32, and may face the first stopper 311a along a movement direction (i.e., the front-rear direction) of the moving tray 32. For example, a first sliding groove 320g1 may be defined in the top surface of the base 320 along a left side of the base 320 of the moving tray 32, and the first stopper 311a may slide in the first sliding groove 320g1. In this case, the first portion 323 may form a portion of a boundary of the first sliding groove 320g1. The first stopper 311a may be referred to as a first hook 311a.

A second stopper 312a may be bent to the left from an upper end of the second rib 312 of the fixed tray 31. A second portion 324 may form another portion of the rear end of the moving tray 32, and may face the second stopper 312a along the movement direction (i.e., the front-rear direction) of the moving tray 32. For example, a second sliding groove 320g2 may be defined in the top surface of the base 320 along a right side of the base 320 of the moving tray 32, and the second stopper 312a may slide in the second sliding groove 320g2. In this case, the second portion 324 may form a portion of a boundary of the second sliding groove 320g2. The second stopper 312a may be referred to as a second hook 312a.

Accordingly, the forward movement of the moving tray 32 may be limited when the first and second portions 323 and 324 of the moving tray 32 come into contact with the first and second stoppers 311a and 312a, respectively. In addition, the first and second stoppers 311a and 312a may prevent the moving tray 32 from deviating upward from the fixed tray 31. As a result, the moving tray 32 may provide the object Ob to a user without being completely separated from the fixed tray 31.

The robot 1 may recover the moving tray 32. For example, the robot 1 may recover the moving tray 32 when it is sensed through a sensor such as the top sensor St that the object Ob has been removed from the moving tray 32 or when a user issues a recovery command to the front display Df. Specifically, the moving tray 32 may move rearward in response to the rotation of the belt 36, and the rearward movement of the moving tray 32 may be limited when the rear end of the moving tray 32 comes into contact with the third rib 313.

Referring to FIGS. 1 to 26, a robot according to an aspect of the present disclosure comprises: a base including a wheel; a frame coupled to the base and having an opening defined therein; and a tray assembly positioned in the opening of the frame, wherein the tray assembly includes: a fixed tray coupled to the frame; and a moving tray coupled to the fixed tray so as to be movable in a direction passing through the opening of the frame.

The fixed tray may extend in a direction intersecting the opening of the frame, and the moving tray may be mounted on the fixed tray so as to be movable in a longitudinal direction of the fixed tray.

The robot may further comprise a sliding assembly positioned between the fixed tray and the moving tray and configured to move the moving tray, the sliding assembly may include: a motor mounted on the fixed tray; a first pulley fixed to a rotation shaft of the motor; a second pulley spaced apart from the first pulley in the movement direction of the moving tray; and a belt connecting the first pulley with the second pulley, and the moving tray may include a rack formed on one surface of the moving tray facing the fixed tray and engaged with the belt.

The sliding assembly may further include a rotary member rotatably coupled to one side of the moving tray, and the rotary member may protrude from the one surface of the moving tray.

The sliding assembly may further include: a holder rotatably coupled to the moving tray in a direction of being inserted into or protruding from the one surface of the moving tray, wherein the rotary member is rotatably coupled to the holder; and an elastic member positioned between the holder and the moving tray, and having one end fixed to the holder and an opposite end fixed to the moving tray, and the elastic member may be compressed when the holder rotates in the direction of being inserted into the one surface of the moving tray.

The rotary member may include: a first rotary member; and a second rotary member opposite to the first rotary member with respect to the rack of the moving tray.

The fixed tray may include: a first rib protruding from a first side of the fixed tray; and a second rib protruding from a second side of the fixed tray, the moving tray may be movable in a space defined between the first rib and the second rib, and the first rib and the second rib may be adjacent to or in contact with side surfaces of the moving tray, respectively.

The fixed tray may further include a third rib protruding from a third side of the fixed tray connecting the first side with the second side and facing one side of the moving tray, the moving tray may be movable in a direction away from or closer to the third rib, and the third rib may be configured to limit the movement of the moving tray by being in contact with the one side of the moving tray.

The fixed tray may further include: a first stopper bent from a distal end of the first rib and positioned on the moving tray; and a second stopper bent from a distal end of the second rib and positioned on the moving tray, the moving tray may include: a first sliding groove where the first stopper is movably seated, wherein the first sliding groove includes a first portion facing the first stopper in the movement direction of the moving tray; and a second sliding groove where the second stopper is movably seated, wherein the second sliding groove includes a second portion facing the second stopper in the movement direction of the moving tray, and the movement of the moving tray may be limited when the first portion and the second portion are in contact with the first stopper and the second stopper, respectively.

The opening may be defined to be elongated in a direction intersecting the movement direction of the moving tray, and the fixed tray may be coupled to the frame so as to be movable in a longitudinal direction of the opening.

The robot may further comprise: a bracket fixed to the fixed tray; and a lift assembly positioned between the bracket and the frame and configured to move the bracket, and the lift assembly may include: a motor mounted on the frame; a first pulley fixed to a rotation shaft of the motor; a second pulley spaced apart from the first pulley in the movement direction of the fixed tray; and a belt connecting the first pulley with the second pulley, wherein the bracket is fixed to the belt.

The lift assembly may further include a pair of guide shafts adjacent to the belt, extending in the longitudinal direction of the opening, fixed to the frame, and spaced apart from each other, and the bracket may be movably coupled to the pair of guide shafts.

The bracket may include: a first bracket; and a second bracket opposite to the first bracket with respect to the fixed tray, and the lift assembly may include a plurality of lift assemblies, the plurality of lift assemblies including: a first lift assembly configured to move the first bracket; and a second lift assembly configured to move the second bracket.

The tray assembly may include a plurality of tray assemblies, the plurality of tray assemblies including: a first tray assembly; and second tray assemblies spaced apart from the first tray assembly in the longitudinal direction of the opening, and the bracket may include: a first bracket fixed to the first tray assembly and a first portion of the belt; and a second bracket fixed to each second tray assembly and a second portion of the belt.

The robot may further comprise: a sensor configured to sense surroundings of the robot; and a controller configured to control an operation of the wheel, a movement of the moving tray, and a movement of the fixed tray based on information obtained by the sensor.

Some embodiments or other embodiments of the present disclosure described above are not exclusive or distinct from each other. Respective configurations or functions of some embodiments or other embodiments of the present disclosure described above may be used in combination or combined with one another.

For example, it means that a component A described in a particular embodiment and/or drawing may be combined with a component B described in another embodiment and/or drawing. In other words, even when combination between components is not explicitly described, such a combination is considered possible unless it is specifically stated that the combination is not possible.

The above detailed description should not be limited in all aspects and should be considered exemplary. The scope of the present disclosure should be determined by the rational interpretation of the appended claims, and all changes within the equivalent scope of the present disclosure are included in the scope of the present disclosure.

## Claims

1. A robot comprising:
a base including a wheel;
a frame coupled to the base and having an opening defined therein; and
a tray assembly positioned in the opening of the frame,
wherein the tray assembly includes:
a fixed tray coupled to the frame; and
a moving tray coupled to the fixed tray so as to be movable in a direction passing through the opening of the frame.

2. The robot of claim 1, wherein the fixed tray extends in a direction intersecting the opening of the frame,
wherein the moving tray is mounted on the fixed tray so as to be movable in a longitudinal direction of the fixed tray.

3. The robot of claim 1, further comprising a sliding assembly positioned between the fixed tray and the moving tray and configured to move the moving tray,
wherein the sliding assembly includes:
a motor mounted on the fixed tray;
a first pulley fixed to a rotation shaft of the motor;
a second pulley spaced apart from the first pulley in the movement direction of the moving tray; and
a belt connecting the first pulley with the second pulley,
wherein the moving tray includes a rack formed on one surface of the moving tray facing the fixed tray and engaged with the belt.

4. The robot of claim 3, wherein the sliding assembly further includes a rotary member rotatably coupled to one side of the moving tray,
wherein the rotary member protrudes from the one surface of the moving tray.

5. The robot of claim 4, wherein the sliding assembly further includes:
a holder rotatably coupled to the moving tray in a direction of being inserted into or protruding from the one surface of the moving tray, wherein the rotary member is rotatably coupled to the holder; and
an elastic member positioned between the holder and the moving tray, and having one end fixed to the holder and an opposite end fixed to the moving tray,
wherein the elastic member is compressed when the holder rotates in the direction of being inserted into the one surface of the moving tray.

6. The robot of claim 4, wherein the rotary member includes:
a first rotary member; and
a second rotary member opposite to the first rotary member with respect to the rack of the moving tray.

7. The robot of claim 3, wherein the fixed tray includes:
a first rib protruding from a first side of the fixed tray; and
a second rib protruding from a second side of the fixed tray,
wherein the moving tray is movable in a space defined between the first rib and the second rib,
wherein the first rib and the second rib are adjacent to or in contact with side surfaces of the moving tray, respectively.

8. The robot of claim 7, wherein the fixed tray further includes a third rib protruding from a third side of the fixed tray connecting the first side with the second side and facing one side of the moving tray,
wherein the moving tray is movable in a direction away from or closer to the third rib,
wherein the third rib is configured to limit the movement of the moving tray by being in contact with the one side of the moving tray.

9. The robot of claim 7, wherein the fixed tray further includes:
a first stopper bent from a distal end of the first rib and positioned on the moving tray; and
a second stopper bent from a distal end of the second rib and positioned on the moving tray,
wherein the moving tray includes:
a first sliding groove where the first stopper is movably seated, wherein the first sliding groove includes a first portion facing the first stopper in the movement direction of the moving tray; and
a second sliding groove where the second stopper is movably seated, wherein the second sliding groove includes a second portion facing the second stopper in the movement direction of the moving tray,
wherein the movement of the moving tray is limited when the first portion and the second portion are in contact with the first stopper and the second stopper, respectively.

10. The robot of claim 1, wherein the opening is defined to be elongated in a direction intersecting the movement direction of the moving tray,
wherein the fixed tray is coupled to the frame so as to be movable in a longitudinal direction of the opening.

11. The robot of claim 10, further comprising:
a bracket fixed to the fixed tray; and
a lift assembly positioned between the bracket and the frame and configured to move the bracket,
wherein the lift assembly includes:
a motor mounted on the frame;
a first pulley fixed to a rotation shaft of the motor;
a second pulley spaced apart from the first pulley in the movement direction of the fixed tray; and
a belt connecting the first pulley with the second pulley, wherein the bracket is fixed to the belt.

12. The robot of claim 11, wherein the lift assembly further includes a pair of guide shafts adjacent to the belt, extending in the longitudinal direction of the opening, fixed to the frame, and spaced apart from each other,
wherein the bracket is movably coupled to the pair of guide shafts.

13. The robot of claim 11, wherein the bracket includes:
a first bracket; and
a second bracket opposite to the first bracket with respect to the fixed tray,
wherein the lift assembly includes a plurality of lift assemblies, the plurality of lift assemblies including:
a first lift assembly configured to move the first bracket; and
a second lift assembly configured to move the second bracket.

14. The robot of claim 11, wherein the tray assembly includes a plurality of tray assemblies, the plurality of tray assemblies including:
a first tray assembly; and
second tray assemblies spaced apart from the first tray assembly in the longitudinal direction of the opening,
wherein the bracket includes:
a first bracket fixed to the first tray assembly and a first portion of the belt; and
a second bracket fixed to each second tray assembly and a second portion of the belt.

15. The robot of claim 10, further comprising:
a sensor configured to sense surroundings of the robot; and
a controller configured to control an operation of the wheel, a movement of the moving tray, and a movement of the fixed tray based on information obtained by the sensor.
